# EUROPEAN PATENT SPECIFICATION

(11) **EP 3 761 256 B1**
(45) Date of publication and mention of the grant of the patent: **16.08.2023**
(21) Application number: 19785894.7
(22) Date of filing: 10.04.2019
(51) Int. Cl.: G06F 30/13, G06F 111/20, G06Q 50/04

(54) **COMPONENT MANAGEMENT DATABASE, COMPONENT MANAGEMENT SYSTEM, AND COMPONENT MANAGEMENT METHOD**
KOMPONENTENVERWALTUNGSDATENBANK, KOMPONENTENVERWALTUNGSSYSTEM UND KOMPONENTENVERWALTUNGSVERFAHREN
BASE DE DONNÉES DE GESTION DE COMPOSANTS, SYSTÈME DE GESTION DE COMPOSANTS ET PROCÉDÉ DE GESTION DE COMPOSANTS

(30) Priority: 11.04.2018 JP 2018076416
(43) Date of publication of application: 06.01.2021
(73) Proprietor: National University Corporation Chiba University, Chiba-shi, Chiba 263-8522 (JP); Maeda Corporation, Chiyoda-ku, Tokyo 1028151 (JP)
(72) Inventor: HIRASAWA, Gakuhito, Chiba-shi, Chiba 263-8522 (JP); TSUNAKAWA, Takashi, Tokyo 102-8151 (JP); YAMATO, Daisaku, Tokyo 102-8151 (JP)
(74) Representative: Ter Meer Steinmeister & Partner
(86) International application number: PCT/JP2019/015559
(87) International publication number: WO 2019/198738

(56) References cited:
- CN-A- 104 281 727
- JP-A- 2000 105 787
- JP-A- 2001 052 037
- JP-A- 2003 228 590
- JP-A- 2006 201 979
- JP-A- 2007 050 706
- JP-A- 2011 134 168
- JP-A- 2015 079 354
- JP-A- 2017 054 324
- JP-A- 2017 091 429
- US-A- 4 916 293
- Krimpenis A. A. ET AL: "3D parametric design and CNC manufacturing of custom solid wood electric guitars using CAD/CAM technology", WOOD MATERIAL SCIENCE & ENGINEERING, vol. 14, no. 2, 22 September 2017 (2017-09-22), pages 66-80, XP093015194, United Kingdom ISSN: 1748-0272, DOI: 10.1080/17480272.2017.1379035
- Meters: "Milling (machining)", , 8 March 2019 (2019-03-08), XP093020717, Retrieved from the Internet: URL:https://en.wikipedia.org/w/index.php?t itle=Milling_(machining)&oldid=886736589 [retrieved on 2023-02-03]

## Description

### TECHNICAL FIELD

The present disclosure relates to a component management database for managing a plurality of components constituting a structural body, a component management system including the component management database, and a component management method.

### BACKGROUND ART

When designing a structural body, a 3D model is used to facilitate visual shape recognition. A 3D model of a structural body is generated by generating 3D component models by modeling the 3D shape with a 3D CAD software for each of the components constituting the structural body, and placing the generated 3D component model in a virtual space.

Recently, in order to make use of the 3D model in each of the design stage, the construction stage, and the maintenance and management stage on the basis of the concepts of BIM and CIM, proposed is an architectural information integrated management system for integrating and managing information related to the 3D model and architecture-related information, where the 3D model information includes 3D CAD data that determines 3D models in space coordinates, for instance (see Patent Document 1, for instance).

Patent Document 1 discloses a memory part which stores 3D model master data including 3D model information that defines a plurality of objects constituting an architectural structure with space coordinates, and architecture-related information master data including architecture-related information in which information for design, order, cost-estimate, construction, or maintenance and management of the architectural structure is associated with the space coordinate information within the 3D model.

Citation List/Patent Literature Patent Document 1: JP5617472B
CN 104 281 727 A relates to a method for designing a tire die on the basis of Excel and CAD (computer aided design) platforms. The method comprises steps of generating a die standard drawing, creating an Excel platform data processing base, inputting data and creating a function relationship, and storing the data. Patent Document 2: JP 2001 052037 A (HITACHI LTD) 23 February 2001 (2001-02-23) relates to a spreadsheet and a CAD system made to cooperate. Non-Patent Literature Document 3: Krimpenis A. A. ET AL: "3D parametric design and CNC manufacturing of custom solid wood electric guitars using CAD/CAM technology",WOOD MATERIAL SCIENCE & ENGINEERING, vol. 14, no. 2, 22 September 2017 (2017-09-22), pages 66-80, XP093015194,United Kingdom ISSN: 1748-0272, DOI: 10.1080/17480272.2017.1379035 relates to 3D parametric design and CNC manufacturing of custom solid wood electric guitars using CAD/CAM technology. Patent Document 4: US 4 916 293 A (CARTLIDGE ANDREW G [GB] ET AL) 10 April 1990 (1990-04-10) relates to the identification of workpieces in the course of manufacture. Non-Patent Literature Document 5: Meters: "Milling (machining)"" 8 March 2019 (2019-03-08), XP093020717,Retrieved from the Internet:URL:https://en.wikipedia.org/w/index.php?title=Milling_(machining)&oldid=886736589 [retrieved on 2023-02-03] relaets to Milling.

### SUMMARY

### Problems to be Solved

However, while the 3D CAD data includes information related to the shape and position (coordinate) of the 3D component models, the 3D CAD data does not include information related to the connection part between a component and another component of the plurality of components constituting the structural body. Thus, it is difficult to determine whether the two components placed in proximate positions to each other in the virtual space are connected to each other by referring to the 3D model expressed in the virtual space on the basis of the 3D CAD data. It may be difficult to appropriately manage a plurality of components constituting the structural body from such 3D CAD data alone.

In view of the above, an object of at least one embodiment of the present invention is to provide a component management database capable of appropriately managing information related to the connection part between a component and another component of a plurality of components constituting a structural body.

### Solution to the Problems

The objects of the present invention are solved by the features of the independent claim. Preferred embodiments are defined in the dependent claims. Any "aspect", "example" and "embodiment" of the description not falling within the scope of the claims does not form part of the invention and is provided for illustrative purposes only.
(1) According to at least one embodiment of the present invention, a component management database for managing a plurality of components constituting a structural body, is configured to: store, for each of the plurality of components, a component ID of the component, a pre-processing shape data of the component, a post-processing shape data of the component, a processed shape data being a difference between the pre-processing shape data and the post-processing shape data, a component ID of a second component to be connected to the component, and a connection category ID representing a connection type of a connection part between the component and the second component, in association with one another; and store a model shape of the connection part by the connection type.

With the above configuration (1), the component management database is configured to store, for each of the plurality of components, a component ID of the component, the shape data related to the component (the pre-processing shape data, the post-processing shape data, the processed shape data), a component ID of another component connected to the component, and a connection category ID representing the connection type of the connection part between the component and the other component, in association with one another. Furthermore, the component management database is configured to store the model shape for each connection type. Thus, by referring to the component management database, it is possible to determine the connection relationship between a component and another component of the plurality of components constituting the structural body, on the basis of the component ID of the other component to be connected to the component and the connection category ID stored in association with the component ID of the component. Thus, with the above configuration (1), it is possible to appropriately manage information related to the connection part between a component and another component of the plurality of components constituting the structural body.

(2) In some embodiment, the component management database according to the above (1) is configured to store, for each of the plurality of components, the pre-processing shape data, the post-processing shape data, the processed shape data, in a form expressible as a table of rows and columns by a spread sheet software.

With the above configuration (2), the component management database stores, for each of the plurality of components, the shape data related to the component (pre-processing shape data, post-processing shape data, processed shape data) in a form that is expressible as a table of rows and columns by a spreadsheet software, and thereby it is possible to facilitate data management and data sharing compared to a hypothetical case where the shape data related to the component is stored as the 3D shape data. Furthermore, with the shape data related to the component being in a form that is expressible as a table of rows and columns by a spreadsheet software, it is possible to view or process the shape data with a computer equipped with a software other than the 3D CAD software that generates the shape data.

When converting the shape data into a form that is expressible as a table of rows and columns from the 3D shape data with a spreadsheet software, the data conversion may cause deterioration of the accuracy or lack of the shape information. However, the component management database stores the shape data of the component in association with the component ID of another component to be connected to the component and the connection category ID, and stores the model shape data of the connection part for each connection type. Thus, the connection relationship between the component and the other component is clear. Thus, it is possible to suppress deterioration of accuracy and lack of the shape information due to data conversion, and it is possible to complement the lacking shape information.

(3) In some embodiments, the component management database according to the above (1) or (2) is configured to further store a tool path of the component generated by a CAM device on the basis of the processed shape data, the tool path of the component being associated with the component ID.

With the above configuration (3), the tool path of the component generated by the CAM device is stored in association with the component ID on the basis of the processed shape data. Thus, it is possible to determine the component easily if a trouble occurs in simulation of operation of the processing device or processing by the processing device according to the tool path of the component. Thus, it is possible to address the trouble immediately by, for instance, correcting the processed shape of the component.

(4) In some embodiments, the above component management database according to any one of the above (1) to (3) is configured to further: store a processing progress information related to a processing progress state of the component sent from a processing device configured to process the component, the processing progress information being associated with the component ID.

With the above configuration (4), the component management database stores the processing progress information related to the processing progress state of the component in association with the component ID, and thus it is possible to determine the progress state of processing of the component by the processing device by referring to the component management database.

(5) In some embodiments, the component management database according to any one of the above (1) to (4) is configured to store an installation information related to an installation state of the component sent from a construction site of the structural body, the installation information being associated with the component ID.

With the above configuration (5), the component management database stores the installation information related to the installation state of the component in association with the component ID, and thus it is possible to determine the installation state of the component at the construction site by referring to the component management database.

(6) In some embodiments, the component management database according to any one of the above (1) to (5) is configured to further: store a metal joint information related to a metal joint which connects the component and the second component at the connection part, the metal joint information being associated with the component ID.

With the above configuration (6), the metal joint information related to the metal joint that connects the component and another component at the connection part is stored in association with the component ID, and thus it is possible to determine the connection relationship of the plurality of components constituting the structural body to another component or the metal joint, by referring to the component management database. Thus, with the above configuration (6), it is possible to appropriately manage information related to the connection part between a component of the plurality of components constituting the structural body and another component or the metal joint.

(7) According to at least one embodiment of the present invention, a component management system includes: the component management database according to any one of the above (1) to (6); and a 3D CAD device capable of sending and receiving data with the component management database. The 3D CAD device includes a post-processing shape generation part capable of generating a post-processing shape data of the component and a post-processing shape data of the second component on the basis of a pre-processing shape data of the component, a pre-processing shape data of the second component, and a model shape of the connection part stored by the connection type.

With the above configuration (7), the 3D CAD device has the post-processing shape generation part, and thus is capable of generating the post-processing shape data of the component and the post-processing shape data of the other component to be connected to the component at the connection part, on the basis of the pre-processing shape data of the component, and the pre-processing shape data of the other component, and the model shape data of the connection part. With the 3D CAD device having the above post-processing shape generation part, it is possible to readily generate the post-processing shape data of the component and the other component.

(8) According to at least one embodiment of the present invention, a component management system includes the component management database according to any one of the above (1) to (6); and a CAM device capable of sending and receiving data with the component management database, the CAM device being capable of generating a tool path of the component on the basis of the processed shape data.

With the above configuration (8), the CAM device is capable of generating the tool path of the component on the basis of the shape data of the processed shape stored in the component management database. It is possible to carry out simulation of operation of the processing device, or processing of the component with the processing device, according to the tool path.

(9) According to at least one embodiment of the present invention, a component management system includes: the component management database according to any one of the above (1) to (6); and an identification mark appended to the component, the identification mark including an encoded information containing an information which specifies the component and an information of a shape model of the component. The identification mark is configured to, when the identification mark is extracted from a captured image of an information terminal and the encoded information is read out from the identification mark, display the shape model of the component on a display of the information terminal such that the shape model overlaps with the captured image.

With the above configuration (9), the identification mark appended to the component is configured to, when the identification mark is extracted from the captured image of the information terminal and the encoded information is read out from the identification mark, display the shape model of the component on a display of the information terminal such that the shape model overlaps with the captured image. Thus, while it is difficult to determine the shape of the component visually after assembly of the component to the structural body, it is possible to easily determine the shape of the component from the identification mark appended to the component. Furthermore, the identification mark includes encoded information that specifies the component such as the component ID, for instance, and thus it is possible to specify the component to which the identification mark is appended, or obtain information related to the component by referring to the component management database.

(10) According to at least one embodiment of the present invention, a component management method for managing a plurality of components constituting a structural body includes: a step of storing in a storage device, for each of the plurality of components, a component ID of the component, a pre-processing shape data of the component, a post-processing shape data of the component, a processed shape data being a difference between the pre-processing shape data and the post-processing shape data, a component ID of a second component connected to the component, and a connection category ID representing a connection type of a connection part between the component and the second component, in association with one another; and a step of storing a model shape of the connection part in the storage device by the connection type.

According to the above method (10), the component management method includes storing, for each of the plurality of components, a component ID of the component, the shape data related to the component (the pre-processing shape data, the post-processing shape data, the processed shape data), a component ID of another component connected to the component, and a connection category ID representing the connection type of the connection part between the component and the other component, in association with one another, in a storage device. Furthermore, the component management method includes storing the model shape for each connection type in the storage device. Thus, by referring to the storage device, it is possible to determine the connection relationship between a component and another component of the plurality of components constituting the structural body, on the basis of the component ID of the other component to be connected to the component and the connection category ID stored in association with the component ID of the component. Thus, according to the above method (10), it is possible to appropriately manage information related to the connection part between a component and another component of the plurality of components constituting the structural body.

### Advantageous Effects

According to at least one embodiment of the present invention, it is possible to provide a component management database capable of appropriately managing information related to the connection part between a component and another component of a plurality of components constituting a structural body.

### BRIEF DESCRIPTION OF DRAWINGS

FIG. 1 is a schematic configuration diagram for describing a component management system according to an embodiment.
FIG. 2 is a schematic configuration diagram showing the configuration of a component management database and a 3D CAD device according to an embodiment.
FIG. 3 is a schematic ER diagram of a component management database according to an embodiment.
FIG. 4 is a schematic perspective view for describing the ER diagram in FIG. 3, showing an example of a structural body.
FIG. 5 is a diagram for describing the ER diagram in FIG. 3, showing a part of data related to the structural body depicted in FIG. 4.
FIG. 6 is a diagram for describing the format of the shape information in the component management database according to an embodiment.
FIG. 7 is a schematic ER diagram of a component management database according to another embodiment.
FIG. 8A is a diagram for describing a wood construction method according to an embodiment, showing the timber framing method.
FIG. 8B is a diagram for describing a wood construction method according to an embodiment, showing the metal-joint timber framing method.
FIG. 9 is a diagram for describing a post-processing shape generation device according to an embodiment.
FIG. 10 is a schematic configuration diagram for describing the identification mark appended to a component according to an embodiment, showing the configuration of the component with the identification mark and an information terminal that captures an image of the identification mark.
FIG. 11 is a flowchart of the component management method according to an embodiment.

### DETAILED DESCRIPTION

Embodiments of the present invention will now be described in detail with reference to the accompanying drawings. It is intended, however, that unless particularly identified, dimensions, materials, shapes, relative positions and the like of components described in the embodiments shall be interpreted as illustrative only and not intended to limit the scope of the present invention.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

The same features may be indicated by the same reference numerals and not described in detail.

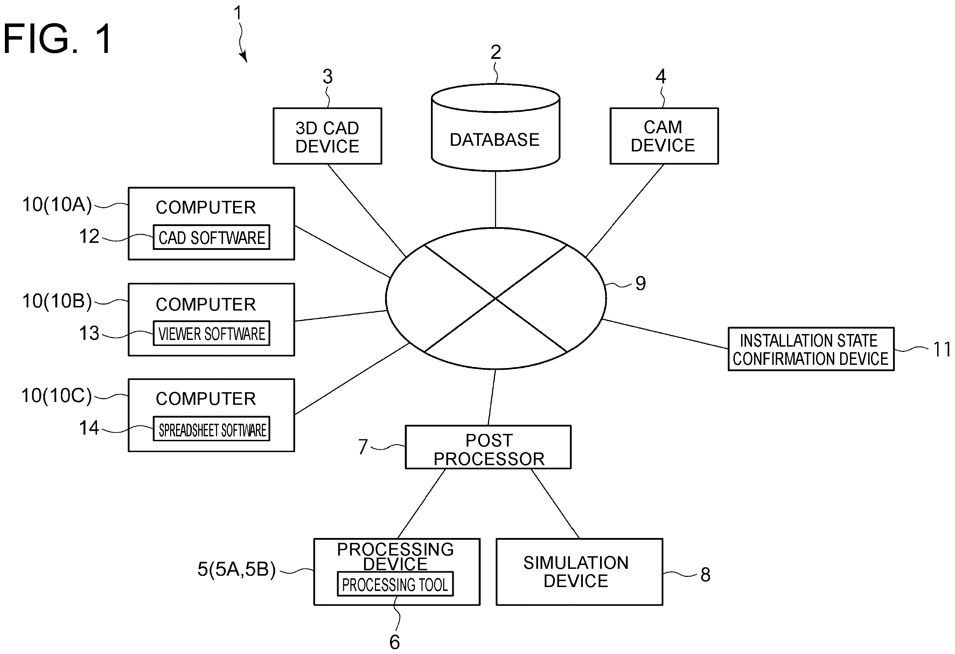

Hereinafter, with reference to FIGs. 1 to 10, the component management database according to some embodiments of the present invention and the component management system including the component management database will be described. The component management database and the component management system are for managing a plurality of components constituting a structural body.

FIG. 1 is a schematic configuration diagram for describing a component management system according to an embodiment. As depicted in FIG. 1, the component management system 1 according to some embodiments includes a 3D CAD device 3 capable of generating, processing, and displaying 3D CAD data, a database 2 (component management database) capable of storing the 3D CAD data generated or processed by the 3D CAD device 3, a CAM device 4 capable of generating a tool path 272 on the basis of the 3D CAD data sent from the 3D CAD device 3 or the database 2, and a processing device 5 capable of processing a processing target using a processing tool 6 on the basis of the tool path 272 generated by the CAM device 4. The "tool path" includes the transfer path that the processing tool 6 (tip of the processing tool 6) travels along as the processing device 5 processes the processing target. In some embodiments, the processing target includes a wooden material. The processing tool 6 may include a rotary blade, a hollow chisel, a router, or an oscillating chisel. The processing tool 6 is configured to be attachable to and detachable from the processing device 5. When the processing device 5 processes a processing target, different processing tools 6 are used interchangeably.

The database 2, the 3D CAD device 3, the CAM device 4, and the processing device 5 are each configured to be capable of telecommunication with one another. In the embodiment depicted in FIG. 1, the 3D CAD device 3, the CAM device 4, and the processing device 5 are each connected to one another through a network 9 such as a LAN. Furthermore, the 3D CAD device 3, the CAM device 4, and the processing device 5 are each installed proximate to one another, or remote from one another. Furthermore, the 3D CAD device 3, the CAM device 4, and the processing device 5 are each provided as a single device or as a plurality of devices.

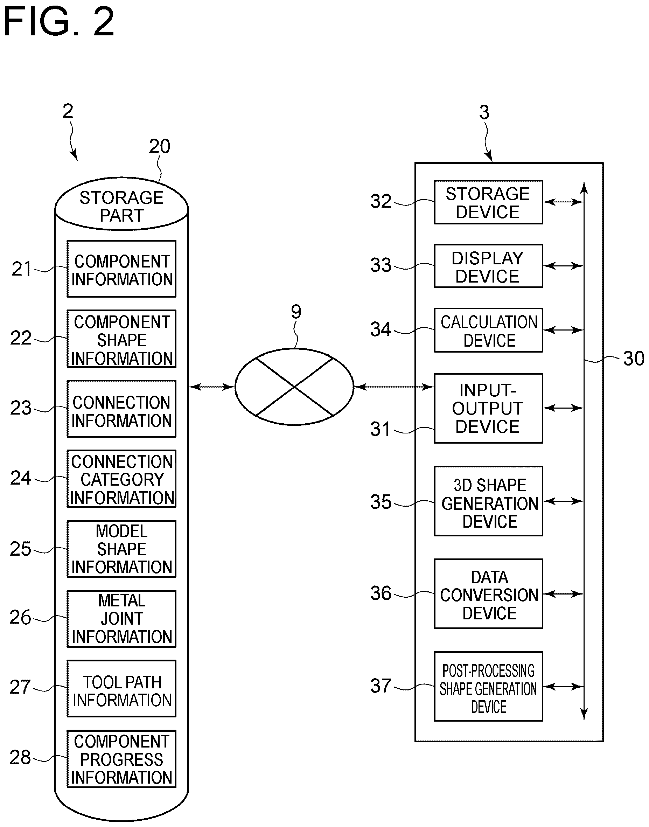

In the embodiment depicted in FIG. 1, the database 2 is configured to receive 3D CAD data generated or processed by the 3D CAD device 3 from the 3D CAD device. The database 2 stores the 3D CAD data sent from the 3D CAD device 3 in a storage part 20 described below (see FIG. 2).

Furthermore, in the embodiment depicted in FIG. 1, the CAM device 4 is configured to receive 3D CAD data from the 3D CAD device 3 or the database 2, and is capable of generating a tool path 272 on the basis of the sent 3D CAD data. The tool path 272 generated by the CAM device 4 is to be sent to the processing device 5, and the processing device 5 is capable of processing a processing target by carrying out a movement according to the tool path 272 sent from the CAM device 4. The database 2 is configured to receive the tool path 272 generated by the CAM device 4 and sent from the CAM device 4, and the database 2 may store the tool path 272 sent from the CAM device 4 in the storage part 20. The processing device 5 may be configured to receive the tool path 272 from the database 2.

With the above configuration, the database 2, the 3D CAD device 3, the CAM device 4, and the processing device 5 are each configured to be capable of telecommunication with one another, and thus the CAM device 4, for instance, is capable of generating the tool path 272 on the basis of the 3D CAD data designed by the 3D CAD device 3 even if the 3D CAD device 3 is installed at a remote site. Furthermore, the processing device 5 is capable of processing the processing target on the basis of the tool path 272 generated by the CAM device 4 installed in a remote site.

In some embodiments, the above described component management system 1 further includes, as depicted in FIG. 1, a post processor 7 capable of converting the language of the tool path 272 into the language of the processing device 5. In a case where the processing device 5 includes a multi-axis robot 5A that is operable through a robot language or the G language, the post processor 7 converts the language of the tool path 272 into the robot language or the G language that is recognizable by the multi-axis robot 5A. Furthermore, in a case where the processing device 5 includes an NC working machine 5B that is operable through an NC code, the post processor 7 converts the language of the tool path 272 into the NC code. That is, the processing device 5 includes a multi-axis processing device such as the multi-axis robot 5A or the NC working machine 5B. In some embodiments, the processing device 5 (multi-axis processing device) is a processing device that has four or more control axes including straight movement axes and turning movement axes. Preferably, the processing device 5 has five or more control axes. More preferably, the processing device 5 has six or more control axes. Furthermore, the post processor 7 is configured to be capable of performing telecommunication with each of the database 2, the 3D CAD device 3, the CAM device 4, and the processing device 5, through the network 9 such as a network LAN. Furthermore, the post processor 7 is configured to convert the language of the tool path 272 sent from the database 2 or the CAM device 4, and send the tool path 272 in a converted language to the processing device 5. In this case, even if the language of the tool path 272 is different from the language that can control the processing device 5, it is possible to operate the processing device 5 according to the tool path 272 by converting the language with the post processor 7.

In some embodiments, the above described component manage system 1 further includes, as depicted in FIG. 1, a simulation device 8 capable of simulation of movement of the processing tool 6 or the processing device 5 (multi-axis robot 5A, NC working machine 5B) equipped with the processing tool 6, according to the tool path 272. The simulation device 8 is configured to be capable of displaying, on a display part (CAM device 4 or a display part of a computer 10 described below), the movement according to the tool path 272 to be followed by the processing tool 6 or the processing device 5 expressed in a virtual space. The simulation device 8 is configured to be capable of performing telecommunication with each of the database 2, the 3D CAD device 3, the CAM device 4, and the processing device 5, through the network 9 such as a network LAN. Furthermore, the simulation device 8 is configured to perform simulation of movement of the processing device 5 according to the tool path 272 sent from the database 2 or the CAM device 4, and send the simulation result to the database 2 or the CAM device 4. Thus, the operator of the simulation device 8 can determine whether the processing tool 6 and the processing device 5 make contact with each other, and whether the processing tool 6 or the processing device 5 makes contact with another device or equipment such as a non-depicted fixing device that fixes the processing target, before the processing device 5 processes the processing target. Thus, with the above described component management system 1 including the simulation device 8, it is possible to ensure the applicability of the tool path 272 and the safety of the processing device 5.

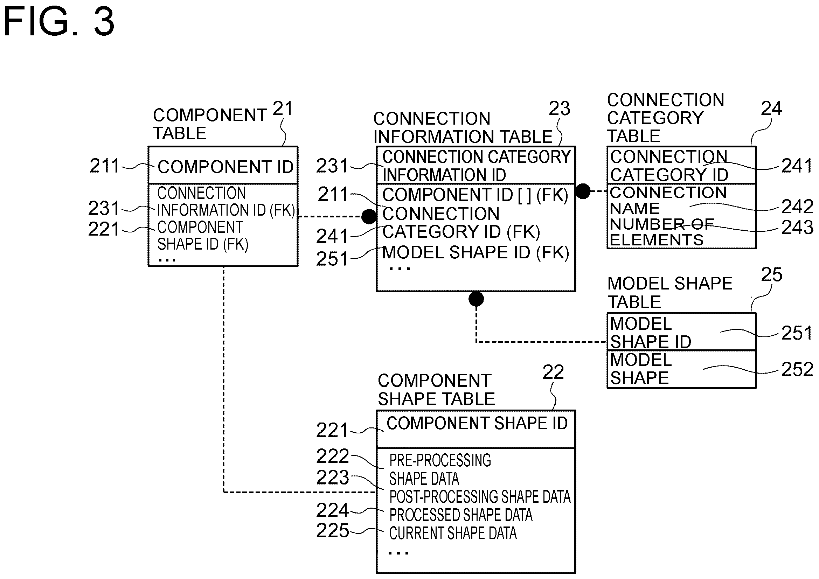

FIG. 2 is a schematic configuration diagram showing the configuration of a component management database and a 3D CAD device according to an embodiment. FIG. 3 is a schematic ER diagram of a component management database according to an embodiment.

The above described 3D CAD device 3 includes, as depicted in FIG. 2, a micro-computer including an input-output device 31 (input-output interface, communication device), a storage device 32 (ROM, RAM), a display device 33 (display monitor), and a calculation device 34. The general configuration and control will not be described in detail. The input-output device 31, the storage device 32, the display device 33, and the calculation device 34 are each electrically connected to a bus 30. Herein, "electrically connected" includes not only the physical wire connection, but also wireless communication, referring to a configuration that enables transmission of signals and data between the connected devices.

The input-output device 31 of the 3D CAD device 3 receives various kinds of information as inputs from each of constituent elements (e.g. the database 2) used in the component management system 1, and outputs the various types of information based on calculation results, for instance, to the above described constituent elements. Furthermore, the input-output device 31 includes a keyboard, a mouse, and a wireless communication device, for instance. The storage device 32 is configured to be capable of storing the various types of information inputted thereto, various programs required to carry out the controls, and the calculation results, for instance. The calculation device 34 is configured to carry out calculation on the basis of the above described various types of information. The display device 33 is configured to display various types of information inputted thereto and the calculation results obtained by the above described calculation device 34.

The 3D CAD device 3 includes, as depicted in FIG. 2, a 3D shape generation device 35 capable of generating 3D shape data (3D CAD data) of the component for each of a plurality of components constituting a structural body. The 3D shape data generated by the 3D CAD device 3 includes 3D CAD data related to the shape (material shape) of the component before being processed by the processing device 5 (pre-processing shape data 222), the 3D CAD data related to the shape (finished product shape) of the component after being processed by the processing device 5 (post-processing shape data 223), and the 3D CAD data related to the shape of a portion of the component that is to be removed from the component through processing by the processing device 5 (processed shape data 224). The pre-processing shape data 222 may be obtained by laserscanning or image-capturing the processing target. The pre-processing shape data 222, the post-processing shape data 223, and the processed shape data 224 generated by the 3D shape generation device 35 are sent to the database 2 through the network 9, and stored in the storage part 20 of the database 2.

The above described database 2 is configured to store, for each of the plurality of components constituting the structural body, a component ID 211 of the component, the pre-processing shape data 222 of the component, the post-processing shape data 223 of the component, the processed shape data 224 being a difference between the pre-processing shape data 222 and the post-processing shape data 223, a component ID 211 of another component to be connected to the component, and a connection category ID 241 representing the connection type of a connection part between the component and the other component, in association with one another. Furthermore, the above described database 2 is configured to store the model shape of the connection part for each of the above connection type.

More specifically, as depicted in FIGs. 2 and 3, the above described database 2 includes a storage part 20 configured to store, for each of the plurality of components constituting the structural body, component information 21, component shape information 22, connection information 23 related to the connection part between the component and the other component, connection type information 24 representing the connection type of the connection part between the component and the other component, and model shape information 25.

Furthermore, as depicted in FIG. 3, the component information 21 includes a component table, containing a component ID 211 for uniquely identifying a component constituting the structural body, a component shape ID 221 for linking to the record of the component shape table described below, and a connection information ID 231 for linking to the record of the connection information table.

As depicted in FIG. 3, the component shape information 22 includes a component shape table, containing the above described component shape ID 221 for uniquely identifying the shape of the component, the pre-processing shape data 222, the post-processing shape data 223, the processed shape data 224, and current shape data 225 that contains information related to the current shape of the component.

As depicted in FIG. 3, the connection information 23 includes a connection information table, containing the above described connection information ID 231 for uniquely identifying the connection part between the component and the other component, an ID for linking to the component ID 211 of each component to be connected at the connection part, a connection type ID 241 for linking to the record of the connection type table described below, and a model shape ID 251 for linking to the record of the model shape table described below.

As depicted in FIG. 3, the connection category information 24 includes a connection type table, containing a connection category ID 241 for uniquely identifying the connection category representing the connection type of the connection part between the component and the other component, a connection name 242 of the connection part, and an element number 243 indicating the number of components to be connected via the connection part. Furthermore, as depicted in FIG. 3, the model shape information 25 includes a model shape table, containing a model shape ID 251 for uniquely identifying the model shape at the connection part, and the model shape data 252.

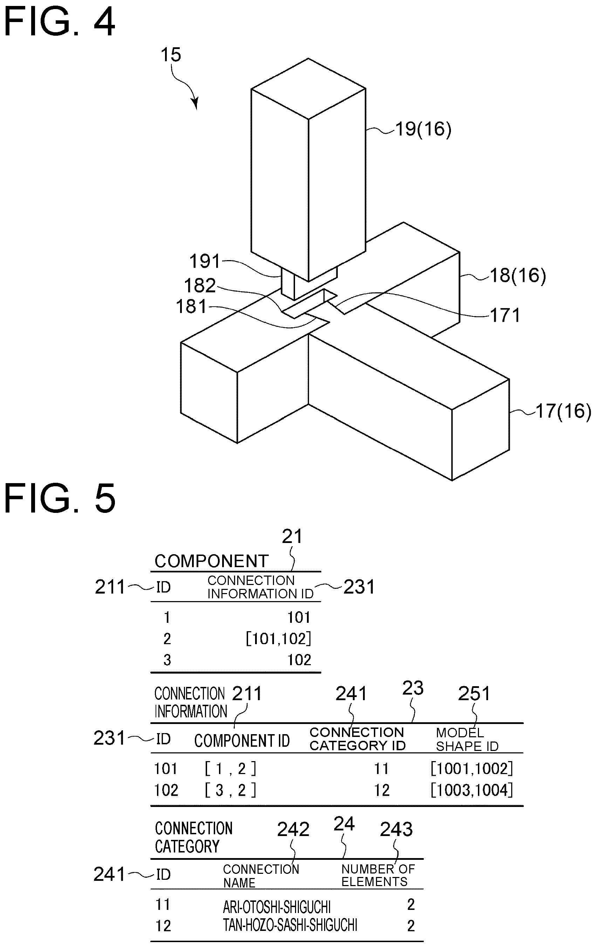

FIG. 4 is a schematic perspective view for describing the ER diagram in FIG. 3, showing an example of a structural body. FIG. 5 is a diagram for describing the ER diagram in FIG. 3, showing a part of data related to the structural body depicted in FIG. 4. As depicted in FIG. 4, the structural body 15 includes three components 16 to be connected via the connection part. As depicted in FIG. 4, the components 16 include a first component 17 having a trapezoid tenon 171 formed on an end portion in the longitudinal direction, a second component 18 having a trapezoid mortise 181 that is engageable with the trapezoid tenon 171 and that is formed on a middle portion in the longitudinal direction, the second component 18 also having a mortise 182 formed on a middle portion in the longitudinal direction, and a third component 19 having a short tenon 191 that is engageable with the mortise 182 and that is formed on an end portion in the longitudinal direction.

In FIG. 5, the ID number 1 of the component ID 211 corresponds to the first component 17, the ID number 2 corresponds to the second component 18, and the ID number 3 corresponds to the third component 19. The ID number 101 of the connection information ID 241 corresponds to the connection part between the first component 17 and the second component 18 to be connected via the connection part. The connection name 242 linked via the connection category ID 241 indicates that the first component 17 and the second component 18 are to be joined by the trapezoid tenon and mortise joint (i.e., the Japanese traditional ari-otoshi-shiguchi wooden framing method). The model shape linked via the model shape ID 251 indicates the model shape of the trapezoid tenon 171 of the first component 17 and the model shape of the trapezoid mortise 181 of the second component 18.

The ID number 102 of the connection information ID 321 corresponds to the connection part between the third component 19 and the second component 18 to be connected via the connection part. The connection name 242 linked via the connection category ID 241 indicates that the third component 19 and the second component 18 are to be joined by the short tenon and mortise joint (the Japanese traditional tan-hozo-sashi-shiguchi wooden framing method). Furthermore, the model shape linked via the model shape ID 251 indicates the model shape of the short tenon 191 of the third component 19 and the model shape of the mortise 182 of the second component 18.

As described above, in some embodiments, the database 2 is configured to store, for each of the plurality of components constituting the structural body, components ID 211 of the above described component and another component to be connected to the component, the above described pre-processing shape data 222, the above described post-processing shape data 223, the above described processed shape data 224, and the above described connection category ID 241, in association with one another. Furthermore, the above described database 2 is configured to store the model shape data 252 of the connection part for each connection type.

With the above configuration, the database 2 is configured to store, for each of the plurality of components, a component ID 211 of the component, the shape data related to the component (the pre-processing shape data 222, the post-processing shape data 223, the processed shape data 224), the component ID 211 of another component to be connected to the component, and a connection category ID 241 representing the connection type of the connection part between the component and the other component, in association with one another. Furthermore, the database 2 is configured to store the model shape data 252 of the connection part for each connection type. Thus, by referring to the database 2, it is possible to determine the connection relationship of the plurality of components constituting the structural body to another component to be connected to the component, on the basis of the component ID 211 of the other component and the connection category ID 341, stored in association with the component ID 211 of the component. Thus, with the above configuration, it is possible to appropriately manage information related to the connection part between the plurality of components constituting the structural body and another component.

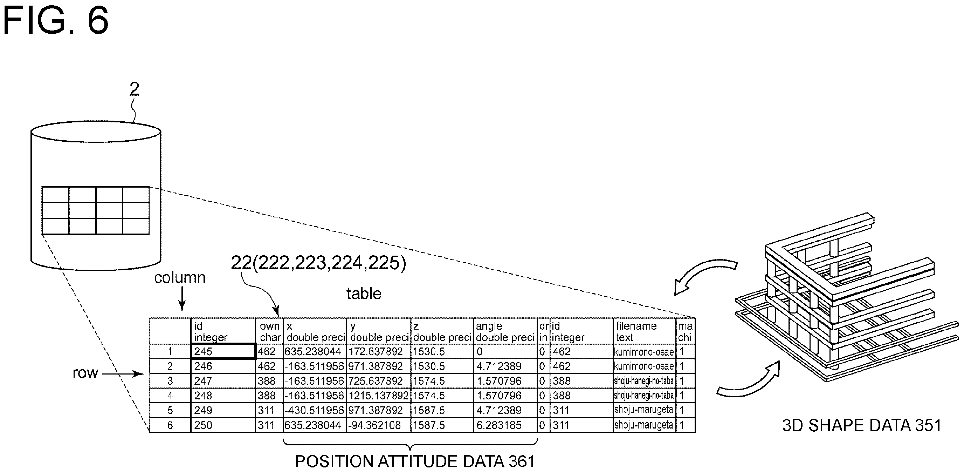

FIG. 6 is a diagram for describing the format of the shape information in the component management database according to an embodiment. In some embodiments, as depicted in FIG. 6, the above described database 2 is configured to store, for each of the plurality of components constituting the structural body, the shape data related to the above described component including the pre-processing shape data 222, the post-processing shape data 223, and the processed shape data 224, in a form expressible as a table of rows and columns by a spreadsheet software 14.

More specifically, as depicted in FIG. 2, the above described 3D CAD device 3 further includes a data conversion device 36 that converts the 3D shape data 351 generated by the 3D CAD device 3 (3D shape generation device 35) into a form that is expressible as a table of rows and columns with the spreadsheet software 14. In the embodiment depicted in FIG. 6, the data conversion device 36 is configured to convert the 3D shape data 351 into position attitude data 361 that includes 3D coordinate data and angle data. The database 2 is configured to store the shape data related to the component (the pre-processing shape data 222, the post-processing shape data 223, the processed shape data 224, and the current shape data 225 described below) in the form of the position attitude data 361. The above described data conversion device 36 may be part of the database 2.

As depicted in FIG. 1, the above described component management system 1 further includes at least one computer 10 connected to the database 2 via the network 9. In the embodiment depicted in FIG. 1, the computer 10 includes a first computer 10A equipped with a CAD software 12 and capable of operating a CAD software 12, a second computer 10B equipped with a viewer software 13 and capable of operating the viewer software 13, and a third computer 10C equipped with the spreadsheet software 14 and capable of operating the spreadsheet software 14.

The CAD software 12 may be a software other than the CAD software installed in the 3D CAD device 3. The first computer 10A and the second computer 10B are capable of displaying the 3D shape of the component on the display parts of the first computer 10A and the second computer 10B by importing the position attitude data 361 stored in the database 2 to the CAD software 12 and the viewer software 13. At this time, it is possible to display a simplified 3D model of the component by importing the model shape data 252 associated with the position attitude data 361 along with the position attitude data 361.

The spreadsheet software 14 is a general software for processing, storing, calculating, and displaying data, such as a database software. The third computer 10C is capable of displaying the shape data of the component on the display part of the third computer 10C as a table of rows and columns, by importing the position attitude data 361 stored in the database 2 to the spreadsheet software 14.

With the above configuration, the database 2 stores, for each of the plurality of components, the shape data related to the component (pre-processing shape data 222, post-processing shape data 223, processed shape data 224) in a form that is expressible as a table of rows and columns (e.g. position attitude data 361), and thereby it is possible to facilitate data management and data sharing compared to a hypothetical case where the shape data related to the component is stored as the 3D shape data 351. Furthermore, with the shape data related to the component being in a form that is expressible as a table of rows and columns by a spreadsheet software, it is possible to view or process the shape data with the computer 10 (10A to 10C) equipped with a software other than the 3D CAD software that generates the shape data.

When converting the shape data (pre-processing shape data 222, post-processing shape data 223, processed shape data 224) into a form that is expressible as a table of rows and columns (e.g. position attitude data 361) from the 3D shape data 351 with a spreadsheet software, the data conversion may cause deterioration of the accuracy or lack of the shape information. However, the database 2 stores the shape data of the component in association with the component ID 211 of another component to be connected to the component and the connection category ID 241, and stores the model shape data 252 of the connection part for each connection type. Thus, the connection relationship between the component and the other component is clear. Thus, it is possible to suppress deterioration of accuracy and lack of the shape information due to data conversion, and it is possible to complement the lacking shape information.

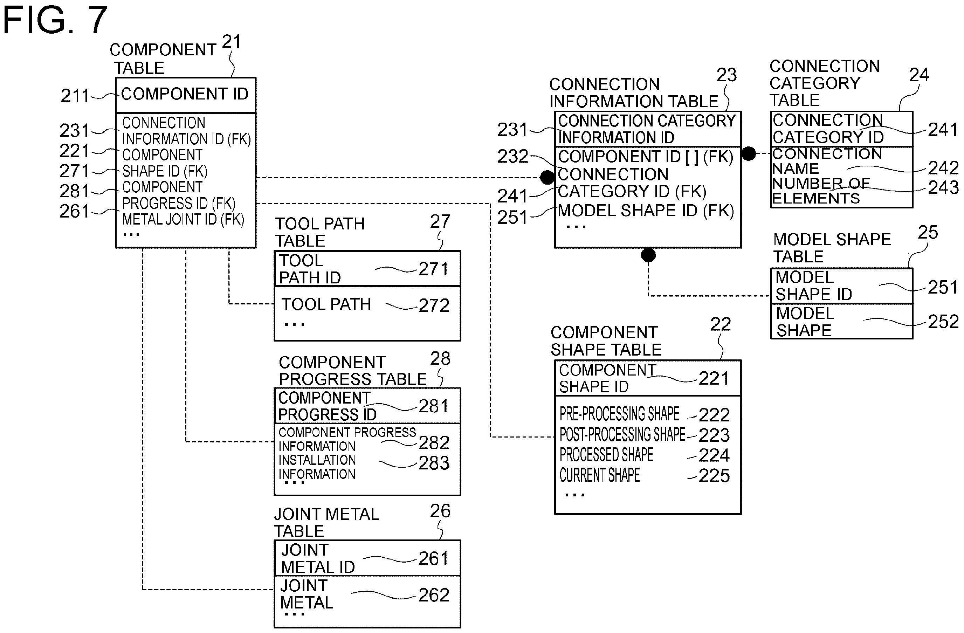

FIG. 7 is a schematic ER diagram of a component management database according to another embodiment. In some embodiments, as depicted in FIGs. 2 and 7, the above described database 2 is configured to further store a tool path 272 of the component generated by the CAM device 4 on the basis of the processed shape data 224, associated with the component ID of the component. The CAM device 4 is configured to generate the tool path 272 on the basis of the processed shape data 224 transmitted from the database 2.

In the embodiment depicted in FIG. 7, the component information 21 further includes a tool path ID 271 for linking to the record of the tool path table described below. The tool path information 27 includes a tool path table, containing the above described tool path ID 271 for uniquely identifying the tool path, and a tool path 272 including the processing procedure. The processing procedure includes information of the processing tool 6 to be used in each step, the transfer path of the processing tool 6, the transfer rates of the processing tool 6 and the processing device 5, and the like.

With the above configuration, the tool path 272 of the component generated by the CAM device 4 is stored in association with the component ID 211 on the basis of the processed shape data 224. Thus, it is possible to determine the component easily if a trouble occurs in simulation of operation of the processing device 5 or processing by the processing device 5 according to the tool path 272 of the component. Thus, it is possible to address the trouble immediately by, for instance, correcting the processed shape of the component.

In some embodiments, as depicted in FIGs. 2 and 7, the above described database 2 further stores processing progress information 282 related to the processing progress state of the component sent from the processing device 5 that processes the component, in association with the component ID 211. Furthermore, the above described database 2 may correct the current shape data 225 to the shape similar to the shape of the component being processed by the processing device 5, on the basis of the processing progress information 282.

In the embodiment depicted in FIGs. 2 and 7, the storage part 20 may further include component progress information 28. As depicted in FIG. 7, the component information 21 further contains a component progress ID 281 for linking to the record of the component progress table described below. The component progress information 28 includes a component progress table, containing the above described component progress ID 281 for uniquely identifying the component progress, the above described processing progress information 282, and the installation information 283 described below.

With the above configuration, the database 2 stores the processing progress information 282 related to the processing progress state of the component in association with the component ID 211, and thus it is possible to determine the progress state of processing of the component by the processing device 5 by referring to the database 2.

In some embodiments, as depicted in FIGs. 2 and 7, the above described database 2 further stores installation information 283 related to the installation state of the component sent from the construction site of the structural body, in association with the component ID 211. As depicted in FIG. 1, the above described component management system 1 further includes an installation state confirmation device 11 capable of obtaining the installation information 283. In some embodiments, the installation state confirmation device 11 includes a capturing device that captures an image of the installation state of the component, positioned at the construction site or proximate to the construction site. Furthermore, in some embodiments, the installation state confirmation device 11 includes a computer or a portable information terminal capable of transmitting the installation state inputted from an input device to the database 2, positioned at the construction site or proximate to the construction site.

With the above configuration, the database 2 stores the installation information 283 related to the installation state of the component in association with the component ID 211, and thus it is possible to determine the installation state of the component at the construction site by referring to the database 2.

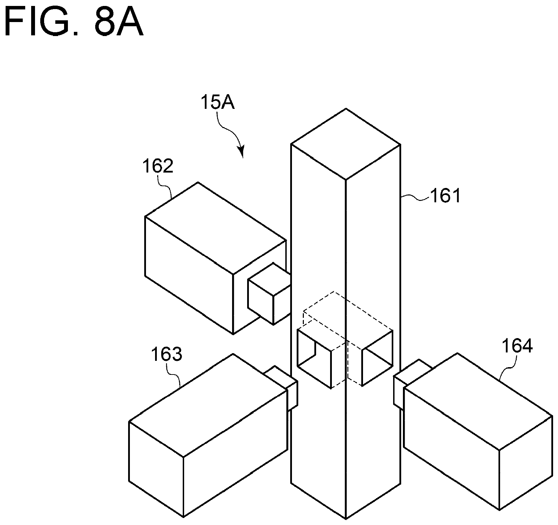

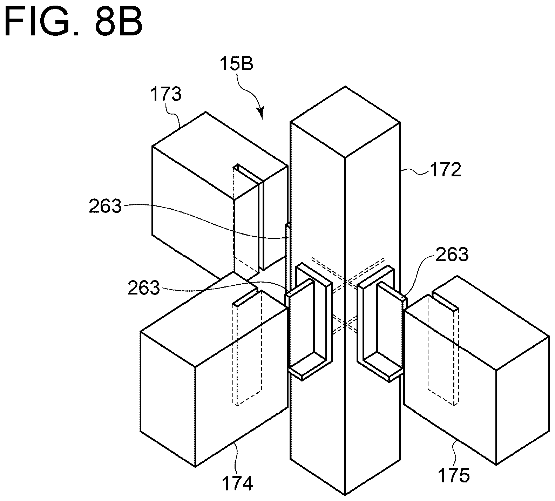

FIGs. 8A and 8B are each a diagram for describing the timber framing method according to an embodiment. FIG. 8A is a diagram showing the timber framing method, and FIG. 8B is a diagram showing the metal-joint timber framing method. As depicted in FIGs. 8A and 8B, for connection at the connection part between the component and another component, a metal joint 263 may be used or not used. In the case of the structural body 15A depicted in FIG. 8A, the protruding portions of the components 162, 163, 164 are engaged with the indent portions or through holes formed on the component 161, and thereby the components 162, 163, 164 are joined to the component 161. That is, the metal joint 263 is not used to connect the components. In contrast, in the case of the structural body 15B depicted in FIG. 8B, the components 173, 174, 175 are fixed to the respective three metal joints 263 attached to the sides of the component 172. That is, the metal joint 263 is used to connect the components.

In some embodiments, as depicted in FIGs. 2 and 7, the above described database 2 further stores metal joint information 26 related to the metal joint 263 that connects the component and another component at the connection part, in association with the component ID 211.

In the embodiment depicted in FIG. 7, the component information 21 further includes a metal joint ID 271 for linking to the record of the metal joint table described below. The metal joint information 26 includes a metal joint table, containing the above described metal joint ID 261 for uniquely identifying the metal joint and the metal joint data 262. The metal joint data 262 includes information related to the shape of the metal joint 263 and the shape of the component for attaching the metal joint 263.

With the above configuration, the metal joint information 26 related to the metal joint 263 that connects the component and another component at the connection part is stored in association with the component ID 211, and thus it is possible to determine the connection relationship between the plurality of components constituting the structural body and another component or the metal joint 263, by referring to the database 2. Thus, with the above configuration, it is possible to appropriately manage information related to the connection part between the plurality of components constituting the structural body and another component or the metal joint.

In some embodiments, as depicted in FIG. 1, the above described component management system 1 includes the above described database 2 and the above described 3D CAD device 3. Further, as depicted in FIG. 2, the 3D CAD device 3 includes a post-processing shape generation device 37 (post-processing shape generation part) capable of generating the post-processing shape data 223 of the component and the post-processing shape data 223 of another component to be connected to the component, on the basis of the pre-processing shape data 222 of the component, the pre-processing shape data 222 of the other component, and the model shape data 252 of the connection part stored by each connection type.

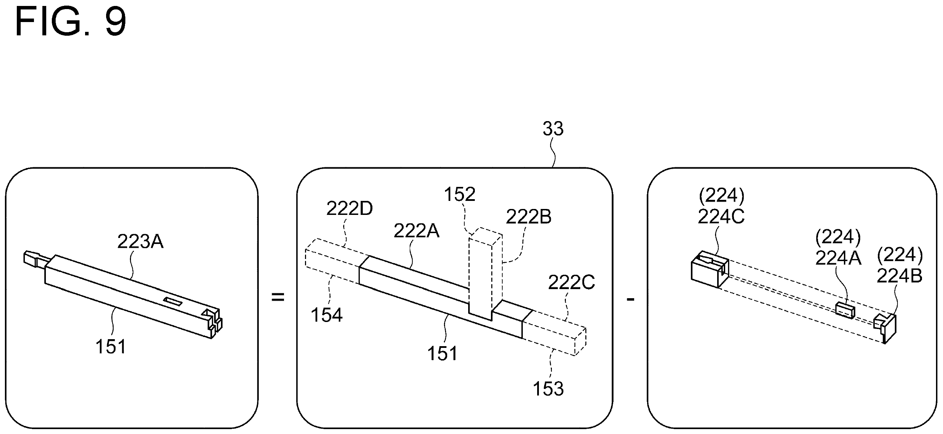

FIG. 9 is a diagram for describing the post-processing shape generation device according to an embodiment. In FIG. 9, the component 151 is connected to the component 152 at the middle position in the longitudinal direction. Further, the component 151 has, in the longitudinal direction, an end portion connected to the component 153 and the other end portion connected to the component 154. As depicted in the middle of FIG. 9, the post-processing shape generation device 37 places the pre-processing shape data 222A of the component 151, the pre-processing shape data 222B of the component 152, the pre-processing shape data 222C of the component 153, and the pre-processing shape data 222D of the component 154 at desired positions, in a space displayed on the display device 33. The components 151 to 154 are shown in pre-processing shapes, and thus are arranged so as to overlap with one another.

Next, the post-processing shape generation device 38 refers to the database 2, and reads out the connection category ID of the components 152 to 154 or the model shape data 252 in association with the component ID 121, on the basis of the component ID 121 of the component 151. Further, the post-processing shape generation device 37 generates processed shape data 224 (224A to 224C) of the component 151 by changing (increasing or decreasing) the size of the model shape data 252 by referring to the shape (cross-section or length) of the components 151 to 154. Herein, the processed shape data 224A is the shape data of a portion to be removed for connection to the component 152. The processed shape data 224B is the shape data of a portion to be removed for connection to the component 153. The processed shape data 224C is the shape data of a portion to be removed for connection to the component 154.

The post-processing shape generation device 37 obtains the post-processing shape data 223A of the component 151 by obtaining a difference between the pre-processing shape data 222A of the component 151 and the processed shape data 224 (224A to 224C). The post-processing shape generation device 37 is also capable of obtaining the post-processing shape data of each of the components 152 to 154 similarly.

With the above configuration, the 3D CAD device 3 has the post-processing shape generation device 37 (post-processing shape generation part), and thus is capable of generating the post-processing shape data of the component (post-processing shape data 223A) and the post-processing shape data of the other component, on the basis of the pre-processing shape data of the component (pre-processing shape data 222A), and the pre-processing shape data of the other component to be connected to the component at the connection part (pre-processing shape data 222B to 222D), and the model shape data 252 at the connection part. With the 3D CAD device 3 provided with the above post-processing shape generation device 37 (post-processing shape generation part), it is possible to readily generate the post-processing shape data of the component and the other component.

As described above, in some embodiments, the above described component management system 1 includes the above described database 2, and the above described CAM device 4 capable of sending and receiving data with the database 2 and generating the tool path 272 of the component (tool path data) on the basis of the shape data of the processed shape (processed shape data 224). In this case, the CAM device 4 is capable of generating the tool path 272 of the component on the basis of the shape data of the processed shape (processed shape data 224) stored in the database 2. It is possible to carry out simulation of operation of the processing device 5, or processing of the component with the processing device 5, according to the tool path 272.

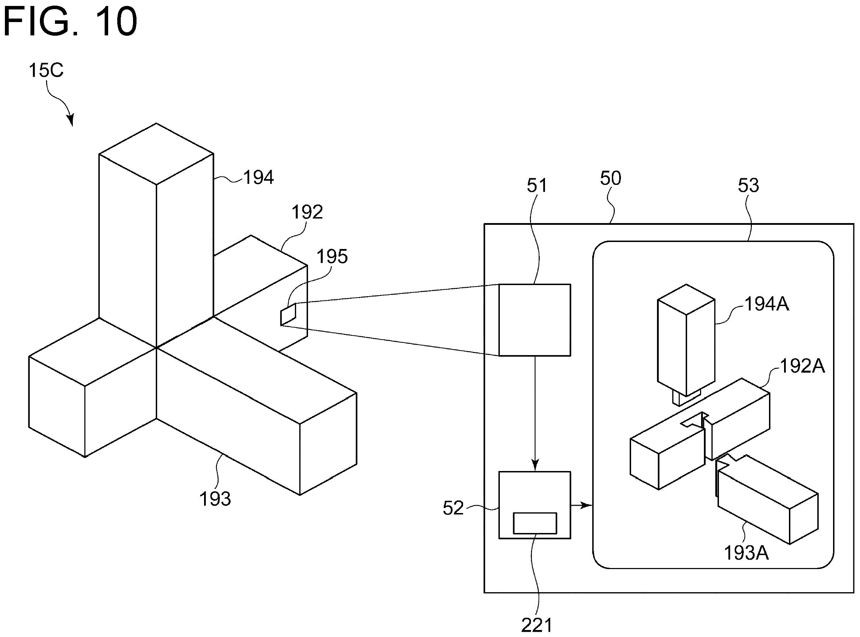

FIG. 10 is a schematic configuration diagram for describing the identification mark appended to a component according to an embodiment, showing the configuration of the component with the identification mark and an information terminal that captures an image of the identification mark. In some embodiments, as depicted in FIG. 10, the above described component management system 1 includes the above described database 2, and an identification mark 195 appended to the component 192, the identification mark 195 including encoded information containing information which specifies the component 192 (including the component ID 211 of the component 192) and information of the shape model 192A of the component 192of the component. Further, the identification mark 195 is configured to, when the identification mark 195 is extracted from the captured image of the information terminal 50 and the encoded information is read out from the identification mark 195, display the shape model 192A of the component 192 on a display of the information terminal 50 such that the shape model 192A overlaps with the captured image.

In the embodiment depicted in FIG. 10, the structural body 15C includes the component 192, the component 193 connected to the component 192, and the component 194 connected to the component 192. The structural body 15C includes the component 192 and the component 193 and the component 194 engaged with one another. The identification mark 195 is appended to the component 192. The identification mark 195 may include a bar code, a QR code (trademark), or an AR marker, for instance. The identification mark 195 may be printed on the component 192, or another member such as a printed sheet of paper may be attached to the component 192.

Further, the information terminal 50 includes a smart phone, a hand phone, a PDA, a tablet computer, or the like. The general configuration and control will not be described in detail. As depicted in FIG. 10, the information terminal 50 includes a capturing device 51 that captures an image, a reading device 52 capable of extracting the identification mark 195 from the captured image captured by the capturing device 51 and reading out information encoded in the identification mark 195, and a display device 53 capable of displaying the captured image and displaying the shape model 192A of the component 192 from information encoded in the identification mark 195 read out by the reading device 52 such that the shape model 192A overlaps with the captured image.

Furthermore, in the embodiment depicted in FIG. 10, the identification mark 195 includes encoded information of the shape models 193A, 194A of the components 193, 194 to be connected to the component 192, and the display device 53 displays the shape models 193A, 194A with the shape model 192A. At this time, as depicted in FIG. 10, the shape models 192A, 193A, and 194A may be displayed at positions separate from one another, to improve the visibility of the assemble structure of the components.

With the above configuration, the identification mark 195 appended to the component 192 is configured to, when the identification mark 195 is extracted from the captured image of the information terminal 50 and the encoded information is read out from the identification mark 195, display the shape model 192A of the component 192 on a display of the information terminal 50 such that the shape model 192A overlaps with the captured image. Thus, while it is difficult to determine the shape of the component 192 visually after assembly of the component 192 to the structural body 15C, it is possible to easily determine the shape of the component 192 from the identification mark 195 appended to the component 192. Furthermore, since the identification mark 195 includes encoded information that specifies the component 192 such as the component ID 211, for instance, it is possible to specify the component 192 to which the identification mark 195 is appended, or obtain information related to the component 192 by referring to the database 2.

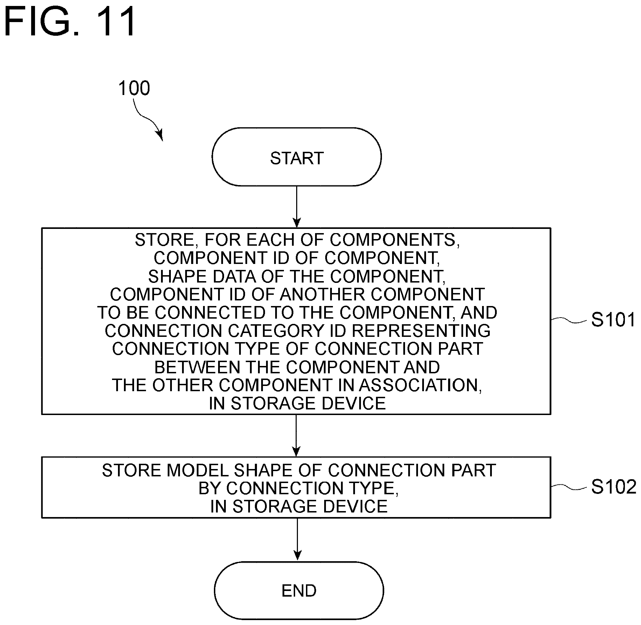

FIG. 11 is a flowchart of the component management method according to an embodiment. In some embodiments, the component management method 100 is a component management method for managing a plurality of components constituting a structural body. As depicted in FIG. 11, the component management method 100 has a step S101 of storing, for each of the plurality of components constituting the structural body, components ID 211 of the above described component and another component to be connected to the component, the above described pre-processing shape data 222, the above described post-processing shape data 223, the above described processed shape data 224, and the above described connection category ID 241, in association with one another, in a storage device (storage part 20), and a step S102 of storing the model shape data 252 of the connection part in the storage device (storage part 20) for each connection type.

According to the above method, the component management method 100 includes storing, for each of the plurality of components, a component ID 211 of the component, the shape data related to the component (the pre-processing shape data 222, the post-processing shape data 223, the processed shape data 224), a component ID 211 of another component to be connected to the component, and a connection category ID 241 representing the connection type of the connection part between the component and the other component, in association with one another, in the storage device (storage part 20). Furthermore, the database 2 is configured to store the model shape data 252 of the connection part for each connection type in the storage device (storage part 20). Thus, by referring to the storage device, it is possible to determine the connection relationship of the plurality of components constituting the structural body to another component to be connected to the component, on the basis of the component ID 211 of the other component and the connection category ID 341 stored in association with the component ID 211 of the component. Thus, according to the above method, it is possible to appropriately manage information related to the connection part between a component and another component of the plurality of components constituting the structural body.

### Reference Signs List

| | | | |
|---|---|---|---|
| 1 | Component management system | 224 | Current shape data |
| 2 | Database | 23 | Connection information |
| 3 | 3D CAD device | 24 | Connection category information |
| 4 | CAM device | 241 | Connection category ID |
| 5 | Processing device | 25 | Model shape information |
| 6 | Processing tool | 252 | Model shape data |
| 7 | Post processor | 26 | Metal joint information |
| 8 | Simulation device | 262 | Metal joint data |
| 9 | Network | 27 | Tool path information |
| 10 | Computer | 272 | Tool path |
| 11 | Installation state confirmation device | 28 | Component progress information |
| 12 | CAD software | 282 | Processing progress information |
| 13 | Viewer software | 283 | Installation information |
| 14 | Spreadsheet software | | |
| 15 | Structural body | | |
| 16 | Component | | |
| 17 | First component | | |
| 18 | Second component | | |
| 19 | Third component | | |
| 20 | Storage part | | |
| 21 | Component information | | |
| 211 | Component ID | | |
| 22 | Component shape information | | |
| 222 | Pre-processing shape data | | |
| 223 | Post-processing shape data | | |
| 224 | Processed shape data | | |

## Claims

1. A component management system (1), comprising:
a component management database (2) for managing a plurality of components constituting a structural body, wherein the component includes a wooden material, the component management database (2) being configured to:
store, for each of the plurality of components, a component ID of the component, a pre-processing shape data of the component, a post-processing shape data of the component, a processed shape data being a difference between the pre-processing shape data and the post-processing shape data, a component ID of a second component to be connected to the component, and a connection category ID representing a connection type of a connection part between the component and the second component, in association with one another; and
store a model shape of the connection part by the connection type;
a CAM device (4) capable of sending and receiving data with the component management database (2), the CAM device (4) being capable of generating a tool path (272) of the component on the basis of the processed shape data;
a processing device (5) capable of processing the component using a processing tool (6) on the basis of the tool path (272) generated by the CAM device (4);
an identification mark appended to the component, the identification mark including an encoded information containing an information which specifies the component and an information of a shape model of the component; and
an information terminal (50) which includes a capturing device (51) that captures an image, a reading device (52) capable of extracting the identification mark (195) from the captured image captured by the capturing device (51) and reading out information encoded in the identification mark (195), and a display device (53) displaying the captured image and displaying the shape model (192A) of the component (192) from information encoded in the identification mark (195) read out by the reading device (52) such that the shape model (192A) overlaps with the captured image,
wherein the identification mark (195) includes encoded information of the shape models (193A, 194A) of the components (193, 194) to be connected to the component (192) appended with the identification mark (195), and the display device (53) is configured to display the shape models (193A, 194A) with the shape model (192A).

2. The component management system (1) according to claim 1,
wherein the component management database (2) is configured to store, for each of the plurality of components, the pre-processing shape data, the post-processing shape data, the processed shape data, in a form expressible as a table of rows and columns by a spread sheet software.

3. The component management system (1) according to claim 1 or 2, wherein the component management database (2) is configured to further:
store the tool path (272) of the component generated by the CAM device (4) on the basis of the processed shape data, the tool path (272) of the component being associated with the component ID.

4. The component management system (1) according to any one of claims 1 to 3, wherein the component management database (2) is configured to further:
store a processing progress information related to a processing progress state of the component sent from the processing device (5), the processing progress information being associated with the component ID.

5. The component management system (1) according to any one of claims 1 to 4, wherein the component management database (2) is configured to further:
store an installation information related to an installation state of the component sent from a construction site of the structural body, the installation information being associated with the component ID.

6. The component management system (1) according to any one of claims 1 to 5, wherein the component management database (2) is configured to further:
store a metal joint information related to a metal joint which connects the component and the second component at the connection part, the metal joint information being associated with the component ID.

7. The component management system (1) according to any one of claims 1 to 6, further comprising:
a 3D CAD device (3) capable of sending and receiving data with the component management database (2),
wherein the 3D CAD device (3) includes a post-processing shape generation part (37) capable of generating a post-processing shape data of the component and a post-processing shape data of the second component on the basis of a pre-processing shape data of the component, a pre-processing shape data of the second component, and a model shape of the connection part stored by the connection type.

8. A component management method for managing a plurality of components constituting a structural body, wherein the component includes a wooden material, the component management method comprising:
a step of storing in a storage device of a component management database, for each of the plurality of components, a component ID of the component, a pre-processing shape data of the component, a post-processing shape data of the component, a processed shape data being a difference between the pre-processing shape data and the post-processing shape data, a component ID of a second component connected to the component, and a connection category ID representing a connection type of a connection part between the component and the second component, in association with one another; and
a step of storing a model shape of the connection part in the storage device by the connection type,
wherein a CAM device (4) is capable of sending and receiving data with the component management database (2), the CAM device (4) being capable of generating a tool path (272) of the component on the basis of the processed shape data,
wherein a processing device (5) processes the component using a processing tool (6) on the basis of the tool path (272) generated by the CAM device (4),
wherein an identification mark is appended to the component, the identification mark including an encoded information containing an information which specifies the component and an information of a shape model of the component,
wherein an information terminal (50) includes a capturing device (51) that captures an image, a reading device (52) capable of extracting the identification mark (195) from the captured image captured by the capturing device (51) and reading out information encoded in the identification mark (195), and a display device (53) displaying the captured image and displaying the shape model (192A) of the component (192) from information encoded in the identification mark (195) read out by the reading device (52) such that the shape model (192A) overlaps with the captured image, and
wherein the identification mark (195) includes encoded information of the shape models (193A, 194A) of the components (193, 194) to be connected to the component (192) appended with the identification mark (195), and the display device (53) is configured to display the shape models (193A, 194A) with the shape model (192A).

## Patentansprüche

1. Komponentenmanagementsystem (1), das umfasst:
eine Komponentenmanagementdatenbank (2) zum Managen mehrerer Komponenten, die einen strukturellen Körper bilden, wobei die Komponente ein Holzmaterial enthält, wobei die Komponentenmanagementdatenbank (2) konfiguriert ist zum:
Speichern für jede der mehreren Komponenten einer Komponenten-ID der Komponente von Daten der Form vor der Verarbeitung der Komponente, von Daten der Form nach der Verarbeitung der Komponente, wobei Daten einer verarbeiteten Form ein Unterschied zwischen den Daten der Form vor der Verarbeitung und den Daten der Form nach der Verarbeitung sind, einer Komponenten-ID einer zweiten Komponente, die mit der Komponente zu verbinden ist, und einer Verbindungskategorie-ID, die einen Verbindungstyp eines Verbindungsteils zwischen der Komponente und der zweiten Komponente repräsentiert, in Verbindung miteinander; und
Speichern einer Modellform des Verbindungsteils durch den Verbindungstyp;
eine CAM-Vorrichtung (4), die Daten mit der Komponentenmanagementdatenbank (2) senden und empfangen kann, wobei die CAM-Vorrichtung (4) einen Werkzeugweg (272) der Komponente anhand der Daten der verarbeiteten Form erzeugen kann;
eine Verarbeitungsvorrichtung (5), die die Komponente unter Verwendung eines Verarbeitungswerkzeugs (6) anhand des durch die CAM-Vorrichtung (4) erzeugten Werkzeugwegs (272) verarbeiten kann;
eine Identifizierungsmarkierung, die an die Komponente angefügt ist, wobei die Identifizierungsmarkierung codierte Informationen enthält, die Informationen, die die Komponente spezifizieren, und Informationen eines Formmodells der Komponente enthalten; und
ein Informationsendgerät (50), das eine Aufnahmevorrichtung (51), die ein Bild aufnimmt, eine Lesevorrichtung (52), die die Identifizierungsmarkierung (195) aus dem durch die Aufnahmevorrichtung (51) aufgenommenen Bild extrahieren und Informationen, die in der Identifizierungsmarkierung (195) codiert sind, auslesen kann, und eine Anzeigevorrichtung (53), die das aufgenommene Bild anzeigt und das Formmodell (192A) der Komponente (192) von Informationen, die in der Identifizierungsmarkierung (195), die durch die Lesevorrichtung (52) ausgelesen werden, codiert sind, so anzeigt, dass sich das Formmodell (192A) mit dem aufgenommenen Bild überdeckt, enthält,
wobei die Identifizierungsmarkierung (195) codierte Informationen der Formmodelle (193A, 194A) der Komponenten (193, 194) enthält, die mit der Komponente (192) zu verbinden sind, an die die Identifizierungsmarkierung (195) angefügt ist, und die Anzeigevorrichtung (53) konfiguriert ist, die Formmodelle (193A, 194A) mit dem Formmodell (192A) anzuzeigen.

2. Komponentenmanagementsystem (1) nach Anspruch 1,
wobei die Komponentenmanagementdatenbank (2) konfiguriert ist, für jede der mehreren Komponente die Daten der Form vor der Verarbeitung, die Daten der Form nach der Verarbeitung, die Daten der verarbeiteten Form in einer Form, die als eine Tabelle von Zeilen und Spalten durch eine Tabellenkalkulations-Software ausdrückbar ist, zu speichern.

3. Komponentenmanagementsystem (1) nach Anspruch 1 oder 2, wobei die Komponentenmanagementdatenbank (2) ferner konfiguriert ist zum:
Speichern des durch die CAM-Vorrichtung (4) erzeugten Werkzeugwegs (272) der Komponente anhand der Daten der verarbeiteten Form, wobei der Werkzeugweg (272) der Komponente der Komponenten-ID zugeordnet ist.

4. Komponentenmanagementsystem (1) nach einem der Ansprüche 1 bis 3, wobei die Komponentenmanagementdatenbank (2) ferner konfiguriert ist zum:
Speichern von Fortschrittsinformationen bezüglich eines Verarbeitungsfortschrittzustands der Komponente, die von der Verarbeitungsvorrichtung (5) gesendet werden, wobei die Verarbeitungsfortschrittsinformationen der Komponenten-ID zugeordnet sind.

5. Komponentenmanagementsystem (1) nach einem der Ansprüche 1 bis 4, wobei die Komponentenmanagementdatenbank (2) ferner konfiguriert ist zum:
Speichern von Installationsinformationen bezüglich eines Installationszustands der Komponente, die von einer Baustelle des strukturellen Körpers gesendet werden, wobei die Installationsinformationen der Komponenten-ID zugeordnet sind.

6. Komponentenmanagementsystem (1) nach einem der Ansprüche 1 bis 5, wobei die Komponentenmanagementdatenbank (2) ferner konfiguriert ist zum:
Speichern von Metallverbindungsinformationen bezüglich einer Metallverbindung, die die Komponente und die zweite Komponente an dem Verbindungsteil verbindet, wobei die Metallverbindungsinformationen der Komponenten-ID zugeordnet sind.

7. Komponentenmanagementsystem (1) nach einem der Ansprüche 1 bis 6, das ferner umfasst:
eine 3D-CAD-Vorrichtung (3), die Daten mit der Komponentenmanagementdatenbank (2) senden und empfangen kann,
wobei die 3D-CAD-Vorrichtung (3) einen Teil zur Erzeugung einer Form nach der Verarbeitung (37) enthält, der Daten der Form nach der Verarbeitung der Komponente und Daten der Form nach der Verarbeitung der zweiten Komponente anhand von Daten der Form vor der Verarbeitung der Komponente, Daten der Form vor der Verarbeitung der zweiten Komponente und einer Modellform des Verbindungsteils, die durch den Verbindungstyp gespeichert ist, erzeugen kann.

8. Komponentenmanagementverfahren zum Managen mehrerer Komponenten, die einen strukturellen Körper bilden, wobei die Komponente ein Holzmaterial enthält, wobei das Komponentenmanagementverfahren umfasst:
einen Schritt des Speicherns in einer Speichervorrichtung einer Komponentendatenbank für jede der mehreren Komponenten einer Komponenten-ID der Komponente, Daten der Form vor der Verarbeitung der Komponente, Daten der Form nach der Verarbeitung der Komponente, wobei Daten einer verarbeiteten Form ein Unterschied zwischen den Daten der Form vor der Verarbeitung und den Daten der Form nach der Verarbeitung sind, einer Komponenten-ID einer zweiten Komponente, die mit der Komponente verbunden ist, und einer Verbindungskategorie-ID, die einen Verbindungstyp eines Verbindungsteils zwischen der Komponente und der zweiten Komponente repräsentiert, in Verbindung miteinander; und
einen Schritt des Speicherns einer Modellform des Verbindungsteils in der Speichervorrichtung durch den Verbindungstyp,
wobei eine CAM-Vorrichtung (4) Daten mit der Komponentenmanagementdatenbank (2) senden und empfangen kann, wobei die CAM-Vorrichtung (4) einen Werkzeugweg (272) der Komponente anhand der Daten der verarbeiteten Form erzeugen kann,
wobei eine Verarbeitungsvorrichtung (5) die Komponente unter Verwendung eines Verarbeitungswerkzeugs (6) anhand des durch die CAM-Vorrichtung (4) erzeugten Werkzeugwegs (272) verarbeitet;
wobei eine Identifizierungsmarkierung an die Komponente angefügt wird, wobei die Identifizierungsmarkierung codierte Informationen enthält, die Informationen, die die Komponente spezifizieren, und Informationen eines Formmodells der Komponente enthalten; und
wobei ein Informationsendgerät (50) eine Aufnahmevorrichtung (51), die ein Bild aufnimmt, eine Lesevorrichtung (52), die die Identifizierungsmarkierung (195) aus dem durch die Aufnahmevorrichtung (51) aufgenommenen Bild extrahieren und Informationen, die in der Identifizierungsmarkierung (195) codiert sind, auslesen kann, und eine Anzeigevorrichtung (53), die das aufgenommene Bild anzeigt und das Formmodell (192A) der Komponente (192) von Informationen, die in der Identifizierungsmarkierung (195), die durch die Lesevorrichtung (52) ausgelesen werden, codiert sind, so anzeigt, dass sich das Formmodell (192A) mit dem aufgenommenen Bild überdeckt, enthält, und
wobei die Identifizierungsmarkierung (195) codierte Informationen der Formmodelle (193A, 194A) der Komponenten (193, 194) enthält, die mit der Komponente (192) zu verbinden sind, an die die Identifizierungsmarkierung (195) angefügt ist, und die Anzeigevorrichtung (53) konfiguriert ist, die Formmodelle (193A, 194A) mit dem Formmodell (192A) anzuzeigen.

## Revendications

1. Système de gestion de composants (1) comportant :
une base de données de gestion de composants (2) pour gérer une pluralité de composants constituant un corps structurel, dans lequel le composant inclut un matériau ligneux, la base de données de gestion de composants (2) étant configurée pour :
stocker, pour chaque composant de la pluralité de composants, un ID de composant du composant, une donnée de forme de pré-transformation du composant, une donnée de forme de post-transformation du composant, une donnée de forme transformée étant une différence entre la donnée de forme de pré-transformation et la donnée de forme de post-transformation, un ID de composant d'un second composant à assembler au composant, et un ID de catégorie d'assemblage représentant un type d'assemblage d'une partie d'assemblage entre le composant et le second composant, en association les uns avec les autres ; et
stocker une forme de modèle de la partie d'assemblage par le type d'assemblage ;
un dispositif de FAO (4) capable d'envoyer et de recevoir des données avec la base de données de gestion de composants (2), le dispositif de FAO (4) étant capable de générer une trajectoire d'outil (272) du composant sur la base des données de forme transformée ;
un dispositif de transformation (5) capable de transformer le composant en utilisant un outil de transformation (6) sur la base de la trajectoire d'outil (272) générée par le dispositif de FAO (4) ;
une marque d'identification ajoutée au composant, la marque d'identification incluant de l'information codée contenant une information qui spécifie le composant et une information d'un modèle de forme du composant ; et
un terminal d'information (50) qui inclut un dispositif de capture (51) qui capture une image, un dispositif de lecture (52) capable d'extraire la marque d'identification (195) de l'image capturée par le dispositif de capture (51) et de lire l'information codée dans la marque d'identification (195), et un dispositif d'affichage (53) affichant l'image capturée et affichant le modèle de forme (192A) du composant (192) à partir de l'information codée dans la marque d'identification (195) lue par le dispositif de lecture (52) de telle sorte que le modèle de forme (192A) recouvre l'image capturée,
dans lequel la marque d'identification (195) inclut de l'information codée des modèles de forme (193A, 194A) des composants (193, 194) à assembler au composant, (192) ajoutée à la marque d'identification (195), et le dispositif d'affichage (53) est configuré pour afficher les modèles de forme (193A, 194A) avec le modèle de forme (192A).

2. Système de gestion de composants (1) selon la revendication 1,
dans lequel la base de données de gestion de composants (2) est configurée pour stocker, pour chaque composant de la pluralité de composants, la donnée de forme de pré-transformation, la donnée de forme de post-transformation, la donnée de forme transformée, sous une forme exprimable dans un tableau de lignes et de colonnes par un logiciel tableur.

3. Système de gestion de composants (1) selon la revendication 1 ou 2, dans lequel la base de données de gestion de composants (2) est configurée pour en outre :
stocker la trajectoire d'outil (272) du composant généré par le dispositif de FAO (4) sur la base des données de forme transformée, la trajectoire d'outil (272) du composant étant associée à l'ID de composant.

4. Système de gestion de composants (1) selon l'une quelconque des revendications 1 à 3, dans lequel la base de données de gestion de composants (2) est configurée pour en outre :
stocker une information de progression de transformation liée à un état de progression de transformation du composant, envoyée à partir du dispositif de transformation (5), les informations de progression de transformation étant associées à l'ID de composant.

5. Système de gestion de composants (1) selon l'une quelconque des revendications 1 à 4, dans lequel la base de données de gestion de composants (2) est configurée pour en outre :
stocker une information d'installation liée à un état d'installation du composant, envoyée à partir du site de construction du corps structurel, l'information d'installation étant associée à l'ID de composant.

6. Système de gestion de composants (1) selon l'une quelconque des revendications 1 à 5, dans lequel la base de données de gestion de composants (2) est configurée pour en outre :
stocker une information de jonction métallique liée à une jonction métallique qui relie le composant et le second composant au niveau de la partie d'assemblage, l'information de jonction métallique étant associée à l'ID de composant.

7. Système de gestion de composants (1) selon l'une quelconque des revendications 1 à 6, comportant en outre :
un dispositif de CAO en 3D (3) capable d'envoyer et de recevoir des données avec la base de données de gestion de composants (2),
dans lequel le dispositif de CAO en 3D (3) inclut une partie de génération de forme de post-transformation (37) capable de générer une donnée de forme de post-transformation du composant et une donnée de forme de post-transformation du second composant sur la base d'une donnée de forme de pré-transformation du composant, d'une donnée de forme de pré-transformation du second composant et d'une forme de modèle de la partie d'assemblage stockée par le type d'assemblage.

8. Procédé de gestion de composants pour gérer une pluralité de composants constituant un corps structurel, dans lequel le composant inclut un matériau ligneux, le procédé de gestion de composants comportant :
une étape consistant à stocker dans un dispositif de stockage d'une base de données de gestion de composants, pour chaque composant de la pluralité de composants, un ID de composant du composant, une donnée de forme de pré-transformation du composant, une donnée de forme de post-transformation du composant, une donnée de forme transformée étant une différence entre la donnée de forme de pré-transformation et la donnée de forme de post-transformation, un ID de composant d'un second composant assemblé au composant, et un ID de catégorie d'assemblage représentant un type d'assemblage d'une partie d'assemblage entre le composant et le second composant, en association les uns avec les autres ; et
une étape consistant à stocker une forme de modèle de la partie d'assemblage dans le dispositif de stockage par le type d'assemblage,
dans lequel un dispositif de FAO (4) est capable d'envoyer et de recevoir des données avec la base de données de gestion de composants (2), le dispositif de FAO (4) étant capable de générer une trajectoire d'outil (272) du composant sur la base des données de forme transformée,
dans lequel un dispositif de transformation (2) transforme le composant en utilisant un outil de transformation (6) sur la base de la trajectoire d'outil (272) générée par le dispositif de FAO (4),
dans lequel une marque d'identification est ajoutée au composant, la marque d'identification incluant de l'information codée contenant une information qui spécifie le composant et une information d'un modèle de forme du composant,
dans lequel un terminal d'information (50) qui inclut un dispositif de capture (51) qui capture une image, un dispositif de lecture (52) capable d'extraire la marque d'identification (195) de l'image capturée par le dispositif de capture (51) et de lire l'information codée dans la marque d'identification (195), et un dispositif d'affichage (53) affichant l'image capturée et affichant le modèle de forme (192A) du composant (192) à partir de l'information codée dans la marque d'identification (195) lue par le dispositif de lecture (52) de telle sorte que le modèle de forme (192A) recouvre l'image capturée, et dans lequel la marque d'identification (195) inclut de l'information codée des modèles de forme (193A, 194A) des composants (193, 194) à assembler au composant, (192) ajoutée à la marque d'identification (195), et le dispositif d'affichage (53) est configuré pour afficher les modèles de forme (193A, 194A) avec le modèle de forme (192A).
